# EUROPÄISCHE PATENTSCHRIFT

(11) **EP 1 747 394 B1**
(45) Veröffentlichungstag und Bekanntmachung des Hinweises auf die Patenterteilung: **22.10.2008**
(21) Anmeldenummer: 05742816.1
(22) Anmeldetag: 13.05.2005
(51) Int. Cl.: F16K 31/06, F01N 3/20

(54) **GEFRIERTAUGLICHES DOSIERVENTIL**
FREEZE-RESISTANT METERING VALVE
SOUPAPE DE DOSAGE RESISTANT AU GEL

(30) Priorität: 18.05.2004 DE 102004025062
(43) Veröffentlichungstag der Anmeldung: 31.01.2007
(73) Patentinhaber: Hydraulik-Ring GmbH, 97828 Marktheidenfeld (DE)
(72) Erfinder: MAISCH, Dieter, 72664 Kohlberg (DE); KLOTZ, Stefan, 72631 Aichtal-Grötzingen (DE); BLEECK, Matthias, 63739 Aschaffenburg (DE)
(86) Internationale Anmeldenummer: PCT/EP2005/052226
(87) Internationale Veröffentlichungsnummer: WO 2005/114018

(56) Entgegenhaltungen:
- DE-A1- 10 256 169
- US-A1- 2002 088 955
- US-A1- 2003 168 620

## Beschreibung

Die Erfindung betrifft ein gefriertaugliches Dosierventil, das im Automobilbau, insbesondere Nutzfahrzeugbau, verwendet werden kann. Das gefriertaugliche Dosierventil ist besonders für Abgasnachbehandlungs- bzw. Auspuffsysteme geeignet.

Aus der US 2003/168620 A1 ist bereits ein Dosierventil bekannt, das einen Magnetteil und einen Hydraulikteil umfasst. Der Magnetteil hat einen durch eine Feder vorgespannten Anker. Der Hydraulikteil hat einen Ringraum zur Aufnahme und Weiterleitung einer Flüssigkeit und einen in einen Ventilsitz weisenden Stößel. Der Ventilsitz hat eine Düsenöffnung an der dem Stößel abgewandten Seite.

Kraftfahrzeuge, insbesondere Nutzfahrzeuge, die in gemäßigten Klimagebieten oder sogar arktischen Gebieten verwendet werden sollen, müssen so ausgelegt sein, dass sie auch Temperaturen unter Null Grad Celsius unbeschadet überstehen können. Dies wird in der Regel durch die Wahl geeigneter Werkstoffe ermöglicht. Hilfsweise wird seit langem eine zusätzliche Wärmequelle verwendet, wenn die Temperaturen zu weit absinken.

Um Stickoxyde (NOx) im Abgas von Kraftfahrzeugen, insbesondere Dieselfahrzeugen, zu reduzieren, haben sich Automobilhersteller und -zulieferer darauf verständigt, eine 32,5 % Harnstoff-Wasser-Lösung (HWL) einzusetzen. Aufgrund des hohen Wasseranteils in der Lösung gefriert die in Betrieb unter Druck stehende Lösung schon bei geringen negativen Grad Celsius.

Schon seit mehreren Jahren macht sich die Fachwelt Gedanken, wie dem Gefrieren der Harnstoff-Wasser-Lösung begegnet werden kann. Eine Lösung besteht darin, beim Abschalten des Kraftfahrzeuges mit Hilfe von Druckluft die gesamte HWL herauszubringen. Das System funktioniert nur, wenn ein Drucklufterzeuger an Bord des Fahrzeuges vorhanden ist. Bei großen Nutzfahrzeugen wird standardmäßig ein Luftdruckerzeuger verbaut. Bei kleinen Nutzfahrzeugen und bei Personenkraftfahrzeugen, die mit einem Dieselmotor ausgestattet sind, ist kein gesondertes Luftversorgungssystem vorgesehen.

Aus der DE 102 56 169 A1 kann entnommen werden, mit welchen aufwendigen Algorithmen ein Steuergerät programmiert werden soll, so dass fehlerhaftes Verhalten aufgrund des Gefrierens identifiziert werden kann.

Die DE 101 39 139 A1 schlägt vor, die Verbindungsleitung mit einer elektrischen Heizung auszustatten, um ein Einfrieren des Reduktionsmittel zu unterbinden. Das hiermit ein Irrweg beschritten wird, kann aus der DE 199 35 920 A1 entnommen werden. Dort ist zu entnehmen, dass der Bedarf an Heizleistung alleine für den Reduktionsmittelvorratsbehälter ein Kilowatt übersteigen würde. Deswegen ist weiterhin aus der Druckschrift zu entnehmen, dass ein Wärmetauscher eingebaut werden kann. Der Wärmetauscher muss nach DE 101 39 142 A1 auch bei Temperaturen kleiner - 11°C das Einfrieren verhindern. Die Anforderungen der Automobilhersteller gehen sogar noch weiter. Sie fordern, dass die Ventile selbst bei - 40°C Umgebungstemperatur einwandfrei arbeiten. Somit gibt es Überlegungen, wie in DE 44 32 577 A1, ein gesondertes Rückspül-Ventil mit unterschiedlichen steuerbaren Funktionsweisen einzubauen. Auch verweist DE 44 32 576 A1 auf die Schwierigkeit durch Frostschutzmittel. Deswegen kann mit unterschiedlichen Volumina gearbeitet werden.

Alle diese Lösungen haben gemeinsam, dass zusätzliche Maßnahmen ergriffen werden müssen, um der Gefriergefahr zu begegnen. Wünschenswert wäre es, ein gefriertaugliches Dosierventil zu haben, das bei den hohen Temperaturen des Abgasstrangs, die 700°C übersteigen können, einwandfrei arbeitet, und gleichzeitig gefriertauglich ist. Selbst bei - 40°C Umgebungstemperatur muss das Dosierventil noch arbeiten können, sofern die HWL in flüssiger Form vorliegt. Dabei soll das gesamte System, in dem das Dosierventil eingebaut ist, energetisch vorteilhaft ausgelegt sein.

Diese und andere Vorteile werden durch ein erfindungsgemäßes gefriertaugliches Dosierventil nach Anspruch 1 und ein entsprechendes Abgasreinigungssystem nach dem abhängigen Anspruch 24 erfüllt. Vorteilhafte Ausgestaltungen sind in den weiteren abhängigen Ansprüchen zu finden.

Das gefriertaugliche Dosierventil soll elektrisch ansteuerbar sein. Dadurch kann das Fahrzeugsteuergerät oder ein besonderes für den Abgasstrang zuständiges Steuergerät die richtige Menge HWL dosieren. Die Erfindung kann auch auf andere Flüssigkeiten, die dosiert werden sollen, angewendet werden. Daher werden Aspekte der Erfindung auch an anderen Flüssigkeiten erklärt. Im normalen Betrieb, wenn der gesamte Abgasstrang inkl. Auspuffrohre und Töpfe durch die Abwärme des Motors erwärmt ist, bedarf es keiner besonderen Berücksichtigung der Gefriergefahr. Gefährlich wird es dann, wenn das Fahrzeug nicht mehr oder nicht betrieben wird. In jedem besonders zu berücksichtigenden Zustand wird kein Ansteuersignal, also kein Strom, durch das Ventil geschickt. Der Stößel in dem Dosierventil verschließt die Öffnung, durch die die HWL geleitet werden soll. Bei einem Absinken der Temperatur von, zum Beispiel, 700°C auf Temperaturen unter dem Gefrierpunkt der HWL (ca. - 11 °C) würde das Dosierventil aufgrund der Ausdehnung der HWL, die ca. 9 bis 11 % betragen kann, auf Dauer geschädigt werden. Die Gefrierkräfte können in einem passiven System vorteilhaft genutzt werden, indem sie in Entlastungsbewegungen umgewandelt werden. Die Entlastungsbewegung schafft einen Gefrierdehnungsraum. Eine Möglichkeit ist es, dass die Entlastungsbewegung kontrolliert wirkt. Die Entlastungsbewegung wirkt mittelbar oder unmittelbar auf den Anker, um durch ein Bewegen des Stößels einen Gefrierdehnungsraum zu schaffen. Innerhalb des Ventiles muss ein Gefrierdehnungsraum bestimmt sein. Dieser kann an verschiedenen Stellen liegen. So ist in einer Ausführungsform der Gefrierdehnungsraum der Bereich, der sich durch ein Abheben des Stößels vom Ventilsitz ergibt. Es kann aber auch ein spezieller Ringraumbereich vorgesehen sein oder ein Raum, der durch die Entlastungsbewegung für die Flüssigkeit erst zugänglich wird. Wenn der Druck in einem der Gefrierdehnungsräume groß genug wird, so übersteigt die resultierende Kraft die entgegengerichtete Federkraft. Dadurch kann der Anker gegen die Federkraft verschoben werden, und der Stößel hebt vom Sitz ab.

Weiterhin zeichnet sich die Erfindung dadurch aus, dass die Menge der Flüssigkeit, die in dem Dosierventil vorhanden ist, auf ein Minimum reduziert wird. Durch ein geschicktes Design des Ventils, der Stößel füllt einen Teil des Raumes aus, der für die Weiterleitung der Flüssigkeit in den Abgasstrang bestimmt ist, den Ringraum, wird der flüssigkeitsaufnehmende Raum minimiert. Weiterhin sind unnötige Hohlräume durch Füllstücke, Hülsen, Lager und andere Verschlussbauteile ausgefüllt. Die Minimierung des Ringraums sollte aus der Sicht der Gefriertauglichkeit immer weiter getrieben werden. Jedoch darf die Minimierung nicht die Fluss des zu dosierenden Materials, der Flüssigkeit, hindern. Mit anderen Worten, der Druckabfall darf nicht merklich sein. Merklich wäre der Druckabfall bei einem Druckabfall von mehr als 5 % des Nenndrucks des Dosierventils. Vorzugsweise sollte der Druckabfall sogar unter 1 % des Nenndrucks des Dosierventils liegen. Beispielhaft kann gezeigt werden, dass bei einem Nenndruck von 5 bar absolut der Druckabfall entlang des gesamten Ringkanals nicht über 250 mbar liegen sollte, vorzugsweise sogar unter 50 mbar liegen sollte.

In einer weiteren vorteilhaften Ausgestaltung bietet das Dosierventil darüber hinaus nachgiebige Dehnungsflächen. Solche Dehnungsflächen können elastische Böden oder Membranen sein. Aufgrund des Gefrierdrucks buchtet sich im Bereich des elastischen Bodens oder der Membran ein Gefrierdehnungsraum aus. Schmilzt die Flüssigkeit, wie zum Beispiel das HWL, so bewegt sich der elastische Boden oder die Membran wieder zurück in ihre ursprünglich Position. Die ursprüngliche Position ist die Betriebsposition.

Weiterhin werden nach einem anderen vorteilhaften Aspekt in manchen Ausführungsformen eines gefriertauglichen Dosierventils bewusste Hinterschneidungen vermieden. Hinterschneidungen sind in den Ventilen vermieden, da in den Bereichen der Hinterschneidung Kräfte durch den Gefrierdruck entstehen können, die im ungerichteten Zustand zur Zerstörung führen können. Die Feder, die den Stößel im unbestromten Zustand in der versperrten Position hält, stützt sich so ab, dass in ihren Abstützbereichen keine Hinterschneidungen notwendig sind. Durch die Vermeidung von Hinterschneidungen wird die einfrierende Flüssigkeit nicht behindert.

Zusätzliche Dehnungsräume können dadurch geschaffen werden, dass zum Beispiel die Düsenplatte, die zum gleichmäßigen Verteilen der zu dosierenden Flüssigkeit vorhanden ist, dehnungsfähig ist, und sich von der Düsenöffnung abheben kann.

Die Feder kann wahlweise in der Flüssigkeit liegen.

Mittels besonderer Dichtungen und besonderer Ringe werden Bereiche in Dosierventilen gegenüber der Flüssigkeit abgedichtet, und so die Menge der im Ventil vorhandenen Flüssigkeit reduziert.

Nach einem weiteren vorteilhaften Aspekt kann das Dosierventil so ausgestaltet sein, dass die Zuleitung über einen dehnbaren Schlauch in eine Hülse mündet. Deren Hülsenaußenseite kann gerippt sein. Über die Hülsenaußenseite wird der dehnbare Schlauch geschoben. Durch die Rippung der Hülsenaußenseite ist die Umwelt gegenüber der HWL abgedichtet. Gefriert die HWL in der Zuleitung oder in der Hülse, so bietet der dehnbare Schlauch einen zusätzlichen Ausgleichsraum. Zum einen kann der Schlauch sich selbst dehnen. Zum anderen kann er sich von einigen Rippen der Hülsenaußenseite leicht abheben, und trotzdem durch die restlichen Rippen der Hülsenaußenseite dichtend gehalten wird.

Bei den Ventilen kann ein weiterer Ausgang vorgesehen sein. Der Ausgang übernimmt zwei Aufgaben. Da das Dosierventil in Betrieb wärmebeständig sein muss und die HWL im Inneren nicht überhitzen darf (eine Solltemperatur von weniger als 90 °C muss eingehalten werden), kann es bei einer Überhitzung notwendig sein, dass durch zusätzliche Flüssigkeit der Düsenhals des Hydraulikteils gekühlt wird. Hierzu wird in einem ständigen Umlauf der HWL durch den Hydraulikteil dieser gekühlt. Im Falle des Gefrierens der Flüssigkeit übernimmt der zusätzliche Ausgang die Aufgabe, das Ventil drucklos zu schalten und einen zusätzlichen Dehnungsraum ebenfalls anzubieten.

Durch ein Verpressen des Stößels mit Anschlagsplatten, Hülsenankern oder Ringankern wird eine große Fläche für den Gefrierdruck geboten. Die große Fläche wandelt die Kraft des Gefrierdrucks der im übrigen minimal vorhandenen Flüssigkeit in eine große Kraft um, die entgegen der Feder wirken kann.

Für ein besseres Verständnis wird auf die folgenden Figuren verwiesen, wobei

Figur 1 ein erstes Ausführungsbeispiel offenbart,

Figur 2 ein zweites Ausführungsbeispiel offenbart,

Figur 3 ein drittes Ausführungsbeispiel offenbart und

Figur 4 einen Schnitt durch den Düsenhals einen Ausführungsbeispieles nach Figur 1 oder 2 wiedergibt.

In den Figuren sind ähnliche Bauteile mit den gleichen Bezugszeichen benummert, selbst wenn geringe konstruktive Unterschiede vorliegen.

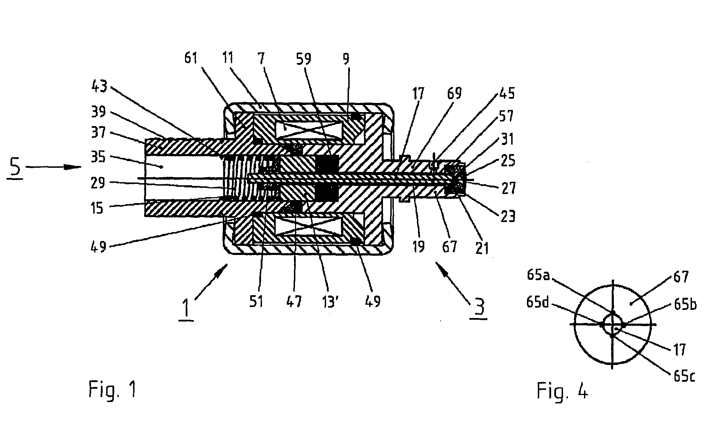

Figur 1 offenbart ein Dosierventil 1. Das Dosierventil 1 umfasst ein Hydraulikteil 3 und ein Magnetteil 5. Der Magnetteil 5 hat eine Spule 7, die zahlreiche Wicklungen hat, und auf einem Spulenträger 9 angeordnet ist. An den Ecken des Spulenträgers sind Dichtungen 49, die zum Beispiel Dichtringe sein können, vorgesehen. Die Dichtungen 49 dichten den Spulenträger gegenüber dem Magnetgehäuse 11 um den Polkern 61 ab. Das Dosierventil ist insgesamt rotationssymmetrisch aufgebaut. In seiner Mitte ist eine Bohrung vorgesehen. In der Bohrung läuft der Stößel 17. Der Raum, der von der Bohrung verbleibt, ist ein Ringraum 19. Der Stößel ist partiell von einem Anker, der ein Hülsenanker 13' ist, umfasst. Der Stößel 17, der an seinem einen Ende in den Ventilsitz 21 mündet, ist an dem Ende abgerundet. An dem anderen Ende mündet der Stößel 17 in eine Ankerhülse 51. Der Ventilsitz 21 ist Teil des Endstücks 23, das auch die Düsenöffnung 25 umfasst. Wahlweise kann auf dem Endstück 23 eine Düsenplatte 27 angeordnet sein. Die Düsenplatte 27 verfeinert die Tröpfchen der Flüssigkeit, die schon durch die trichterförmige Düsenöffnung 25 und durch die Düse 73 zerstäubt werden. Die HWL wird ohne Druckluft in den Abgasstrang eingebracht. Daher kann es notwendig sein, dass die Flüssigkeit noch weiter zerstäubt wird. In der Nähe des Endstücks 23 ist ein Lager 57 vorgesehen, durch das der Flüssigkeitsraum minimiert wird. Das Lager 57 führt den Stößel 17. Durch die Hülse 59 wird der Flüssigkeitsraum weiter minimiert. Auf der anderen Seite sind bewusste Ausgleichsräume vorgesehen. Zum Beispiel die Öffnung 45, eine zweite Öffnung, dient zur Druckentlastung und im Gefrierzustand als Ausgang zu einem Ausgleichsraum, z. B. in einem Dehnungsschlauch, der optional vorhanden sein kann. Der Ring 47 übernimmt mehrere Aufgaben, er leitet den magnetischen Fluß um, indem er den direkten Fluss unterbricht, und dichtet die Zuleitung beziehungsweise den Ringraum 19 gegenüber dem Spulenträger. Durch die Einprägungen 43, auf denen die Feder 15 sich abstützen kann, werden Hinterschneidungen vermieden. Die Einprägungen 43 sind so groß, dass die Feder 15 stabil abgestützt ist, aber keine Beeinflussung der Flüssigkeit in der Zuleitung 35 verursacht wird. Auf der anderen Seite der Feder 15 drückt die Feder gegen den Anker 13, der ein Hülsenanker 13' ist. Am Düsenhals 67 sind Einschraubungsausbuchtungen vorgesehen. Die Hülse 37 ist durch ihre Düsenaußenseite 39, die ein Tannenbaumprofil hat, nicht nur für die Aufnahme eines elastischen Schlauches vorgesehen, sondern sie ist auch gleichzeitig der Polkern 61 für den magnetische Schluss der Spule 7 auf den Anker 13'. Im unbestromten Zustand, das ist der Zustand in dem kein Strom durch die Spule 7 fließt, drückt die Feder 15 den Anker 13' über den Stößel 17 gegen den Ventilsitz 21. Die Vorspannung der Feder 15 ist permanent vorhanden, sofern nicht durch ein Gefrieren der Flüssigkeit in der Zuleitung 35 die Feder in ihrer Ausdehnung gehemmt wird. Über die Hülse 51 wird der Stößel 17 im unbestromten Zustand durch die Federkraft der Feder 15 gegen den Ventilsitz 21 des Endstücks 23 gedrückt. Der Ringraum, der in diesem Ausführungsbeispiel 5/10 mm insgesamt groß ist, nimmt nur eine minimale Menge Flüssigkeit auf. Gefriert diese minimale Menge Flüssigkeit, so wird die Flüssigkeit gegen die verformbare Membran 33 bzw. Boden 33' gedrückt. Ebenfalls kann die Flüssigkeit in den elastischen Schlauch gedrückt werden. Übersteigt die Kraft, die sich aus dem dabei entstehenden Innendruck auf die entsprechende Fläche bildet, wird der Stößel 17 gegen die Federkraft verschoben und hebt den Stößel 17 von dem Ventilsitz 21 ab. Hierdurch werden Ausgleichsräume freigegeben. Ein erster Ausgleichsraum 29 und ein zweiter Ausgleichsraum 31 sind in diesem Ausführungsbeispiel vorgesehen. Weiterhin ist die Öffnung 45 vorgesehen. In die Ausgleichsräume 29 und 31, die in der Zuleitung 35 und dem Ventilsitz 21 liegen kann die gefrierende Flüssigkeit ausweichen. Das Magnetgehäuse 11 ist an seinen Enden umgebördelt und drückt so den Polkern 61 und den Hydraulikteil 3 gegen den Ring 47. Der magnetische Umlenker, den der Ring 47 darstellt, dichtet die beiden Teile des Ventils und wird ggf. verschweißt. Das Ventilgehäuse 69 ist entsprechend der aufnehmenden Einheit, z. B. des Auspuffs des Kfzs, konturmäßig durch Ein- und Ausbuchtungen gestaltet.

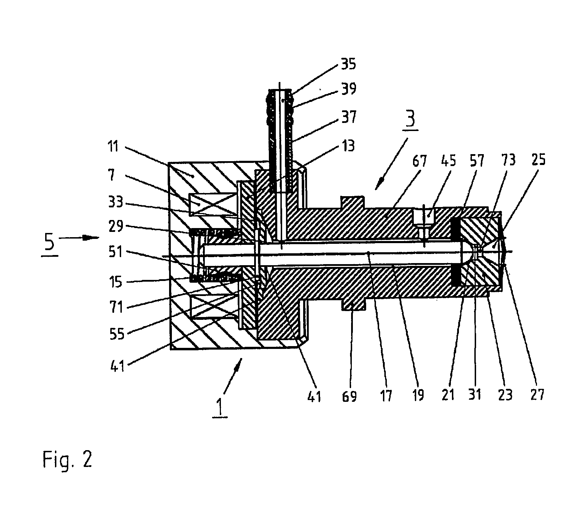

Im Gegensatz zu dem Dosierventil 1 nach Figur 1, das mit einem axialen Zuleitungsanschluss der Zuleitung 35 versehen ist, ist das Dosierventil 1 nach Figur 2 mit einem seitlichen Anschluß ausgestattet. Beide Ventile haben einen langen Dosierventilhals, den Düsenhals 67, um mit einem entsprechenden Temperaturgradienten dafür zu sorgen, dass im hinteren Teil des Ventils nicht so hitzebeständige Werkstoffe für die Feder 15 und die Spule 7 sowie die Zuleitung 35 verwendet werden müssen. Das Dosierventil 1 hat ebenfalls einen Hydraulikteil 3 und einen Magnetteil 5. Die Feder 15 stützt sich auf der einen Seite gegen das Magnetgehäuse 11 und auf der anderen Seite gegenüber dem Anker 13, der ein Flachanker ist, ab. In dem Magnetgehäuse 11 liegt eine Spule 7. Auf dem Stößel 17 der über seine gerundete Spitze in den Ventilsitz 21 mündet, hat an seinem anderen Ende eine Hülse 51 aufgeschrumpft. Der Ventilsitz 21 in dem Endstück 23 mündet in die Düsenöffnung 25, die durch eine optionale Düsenplatte 27 zur Verteilung der Flüssigkeit abgedeckt ist. Das Dosierventil 1 weist zwei Ausgleichsräume 29 und 31 auf und hat einen weiteren optionalen Ausgang 45. Der erste Raum 29 ist durch eine Membran 33 begrenzt. Der Raum 29 übernimmt mit Hilfe der Membran 33 die Funktion eines Ausgleichsraums. Auf der dem Ausgleichsraum 29 gegenüberliegenden Seite ist ein Hohlraum 55 vorgesehen. Die Membran 33 ist durch Schweißpunkte oder durch dichte Schweißnahten mit dem Ventilgehäuse 69 und dem Stößel 17 verbunden. Es handelt sich um eine Metallmembran. Über die Zuleitung 35 in der Hülse 37, die die Hülsenseite 39 hat, wird die Flüssigkeit an das Dosierventil aus einem elastischen Schlauch übergeben. Statt eines elastischen Schlauches kann in einem weniger vorteilhaften Ausführungsbeispiel auch ein metallenes Rohr vorgesehen werden. Hierdurch geht jedoch ein weiterer Ausgleichsraum verloren. Die Flüssigkeit, die in der Zuleitung 35 vorhanden ist, fließt über den Ringraum 19 entlang des Stößels 17 zum Ventilsitz 21. Wenn die Spule 7 bestromt ist, wird der Anker 13 auf die Spule 7 gezogen. Im geöffneten Zustand des Dosierventils 1 verkleinert sich oder verschwindet der Hohlraum 55. Die Feder 15 wird durch den Anker 13 zusammengedrückt. Am Ende des Betriebes des Kraftfahrzeuges wird die Spule 7 stromlos geschaltet. Der Stößel 17 sinkt auf sein Ventilsitz 21. Die Flüssigkeit, die im Ausgleichsraum 31 vorhanden ist, wird über die Düsenplatte 27 in den Abgasstrang des Fahrzeuges abgegeben. Gefriert nun bei entsprechender Abkühlung des Dosierventils 1 die Flüssigkeit in dem Ringraum 19, so drückt die gefrierende Flüssigkeit gegen die Membran 33. Die Kraft des Gefrierdrucks wird über die Scheibe 71 auf den Anker 13 weitergegeben. Der Anker 13 drückt gegen die Feder 15. Über die Hülse 51 wird der Stößel 17 vom Ventilsitz 21 abgehoben. Der Ausgleichsraum 31 wird dadurch freigegeben. Der weitere Ausgleichsraum 29, der durch die Membran 33 vergrößerbar ist, bietet zusätzlichen Raum für die Ausdehnung der gefrierenden Flüssigkeit. Weiterhin bietet die Öffnung 45, die aber nicht vorhanden sein muss, einen Ausgleichsraum. Der Hydraulikteil 3 ist schmaler als der Magnetteil 5. Weil der Hydraulikteil 3 aus hitzebeständigem Material gefertigt sein muss, möchte man möglichst wenig von dem wertvollen Werkstoff verwenden. Das Lager 57 begrenzt die mögliche Flüssigkeitsmenge, die im Ringraum 19 vorhanden sein kann. Das Lager führt die Nadel bzw. den Stößel, der ggf. mit Löchern versehen ist.

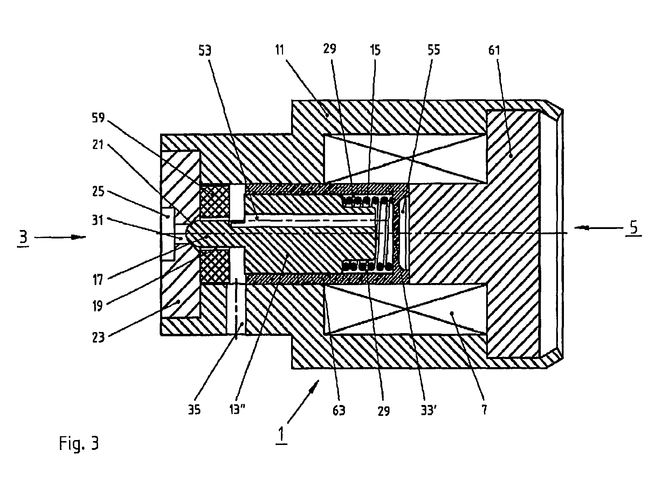

In Figur 3 ist eine andere Ausführungsform eines erfindungsgemäßen Dosierventils 1 offenbart. Das gesamte Dosierventil 1, bestehend aus Hydraulikteil 3 und Magnetteil 5, ist beispielhaft kürzer als die Dosierventile nach Figur 2 und 1. Es ist aber dafür breiter. Die Geometrie des Ventilsteils ist an die Anforderungen angepasst. Das Dosierventil ist ebenfalls rotationssymmetrisch, bis auf einige Ausnahmen, aufgebaut. Der Anker 13" ist ein Stößelanker, der in einen Stößel 17 mündet und eine Ankerbohrung 53 hat. Auf der einen Seite des Stößelankers 13" greift die Feder 15 an, die die sich gegenüber dem Dichtungstopf 63 abstützt. Der Dichtungstopf 63 ist mit einem Hohlraum 55 ausgestattet, der einen Dehnungsraum für das Volumen aus Raum 29 bieten soll. Die Zuleitung 35 führt seitlich an den Stößel 17 heran, der vom Innenraum 19 partiell umgeben ist. Der Stößel 17 mündet in den Ventilsitz 21 des Endstücks 23. Das Endstück 23 ist in diesem Ausführungsbeispiel ohne Düsenplatte ausgestattet. Auch ist der Ausgleichsraum 31 im Bereich der Düsenöffnung 25 kleiner als in den Dosierventilen nach Figur 1 oder 2. Das Lager 57 begrenzt die maximale Menge der Flüssigkeit, die sich im Ringraum 19 und in der Zuleitung 35 befinden kann. Wird die Spule 7 bestromt, wird der Anker 13 durch das Magnetfeld gegen die Federkraft der Feder 15 in Richtung auf den Polkern 61 bewegt. Dadurch wird der Stößel 17 vom Ventilsitz 21 abgehoben. Im unbestromten Zustand sackt der Stößel 17 auf den Ventilsitz 21. Gefriert die Flüssigkeit in der Zuleitung 35 oder dem Ringraum 19, so drückt die gefrierende Flüssigkeit gegen den Stößelanker 13", der Stößelanker 13" wird gegen die Feder 15 bewegt. Dadurch wird die HWL im Raum 29 in Richtung auf den elastischen Boden 33 verdrängt. Die Feder 15 wird zusammengedrückt. Der Stößel 17 hebt vom Ventilsitz 21 ab. Die Flüssigkeit kann in den Ausgleichsraum 31 ausweichen. Wenn der Ausgleichsraum nicht ausreicht, kann ein zusätzlicher Ausgleichsraum über den flexiblen Boden 33'im Bereich der Feder 15 geschaffen werden. Das Magnetgehäuse 11 ist gleichzeitig das Ventilgehäuse. Der Hohlraum, der ebenfalls ein erster Ausgleichsraum 29 ist, steht über die Ankerbohrung 53 mit der Zuleitung 35 und dem Ringraum 19 in fluidischer Verbindung. Der Anker 13" ist beidseitig von der Flüssigkeit getragen oder umgeben.

In der Figur 4 ist noch eine weitere, alternative Möglichkeit aufgezeigt, wie die Menge der vorhandenen Flüssigkeit weiter reduziert werden kann. Statt einen komplett umlaufenden Ringraum 19 entlang des gesamten Stößels 17 zu haben, ist der Stößel 17 nur teilweise mit Zügen und Feldern 65a, 65b, 65c und 65d versehen. Das restliche Volumen des Düsenhalses 67 ist aus massiven Material. Nur die minimal vorhandene Flüssigkeit in den exzentrisch vorhandenen Öffnungen 65a, 65b, 65c und 65d kann dann noch gefrieren. Das massive Material des Düsenhalses 67 trägt weiterhin zur Festigkeit des Düsenhalses 67 bei. Ein gezeigter Düsenhals kann sowohl in den Ventilen nach Fig. 1, nach Fig. 2 und auch nach Fig. 3 vorhanden sein. Es muss nur jeweils der Düsenhals entsprechend angepasst sein.

Die erfindungsgemäßen Ventile werden vorzugsweise mit einem elastischen Schlauch verbunden, durch den die Flüssigkeit an das Dosierventil geleitet wird. Der Ventilsitz mündet in den Abgasstrang des Kraftfahrzeuges. Bei mit Dieselmotoren angetriebenen Fahrzeugen wird eine 32,5 % Harnstoff-Wasser-Lösung durch das Ventil geleitet. Die gefriertauglichen Ventile sind aber so vorteilhaft entwickelt, dass auch andere Flüssigkeiten durch die Dosierventile geleitet werden können. So kann genauso gut auch reines Wasser oder Salzwasser oder auch Diesel durch die Ventile geleitet werden.

Das Ventil zeichnet sich dadurch aus, dass es auf der einen Seite in einer Umgebung arbeiten kann, die mehr als 700°C erreichen darf und auf der anderen Seite auch noch bei Temperaturen, so niedrig wie -40°C, keine dauerhaften Schäden erfährt. Hierzu trägt bei, dass die Menge der Flüssigkeit im Ventilinnenraum minimiert wird. Weiterhin sind nur ausgewählte Bauteile durch die Flüssigkeit benetzt. Das gesamte System arbeitet im Gefrierzustand passiv. Das System entlastet sich selbst beim Einfrieren. Es wird keine zusätzliche Energiequelle benötigt. Die flüssigkeitsbenetzenden Räume und flüssigkeitsenthaltenen Räume sind ohne Hinterschneidungen oder Störkonturen entworfen worden. Selbst wenn Ventile nur das eine oder das andere der zuvor zusammengefassten Merkmale aufweist, fallen sie unter den Schutzumfang dieser Erfindung.

Bezugszeichenliste:

**Tabelle 1**

| | |
|---|---|
| 1 | Dosierventil |
| 3 | Hydraulikteil |

5... Magnetteil

7... Spule (mit Wicklungen)

9... Spulenträger

11... Magnetgehäuse

13... Anker als Flachanker

13'... Anker als Hülsenanker

13"... Anker als Stößelanker

15... Feder (Spiraldruckfeder)

17... Stößel

19... Ringraum

21... Ventilsitz

23... Endstück

25... Düsenöffnung

27... Düsenplatte (wahlweise)

29... erster Ausgleichsraum (als Teil des Gefrierdehnungsraum)

31... zweiter Ausgleichsraum (als Teil des Gefrierdehnungsraum)

33... Membran

33'... elastischer Boden

35... Zuleitung

37... Hülse (Außenseite gerippt)

39... Hülsenaußenseite

41... Schweißpunkte

43... Einprägungen

45... Öffnung (zweite)

47... Ring

49... Dichtung als O-Ring

51... Ankerhülse

53... Ankerbohrung

55... Hohlraum

57... Lager

59... Hülse

61... Polkern

63... Dichtungstopf

65... Ringraumöffnungen (65a, 65b, 65c, 65d)

67... Düsenhals

69... Ventilgehäuse

71... Scheibe

73... Düse

### Verweise

DE 10139139 A (ROBERT BOSCH GMBH) ; DE 10256169 A (TOYOTA MOTOR CORPORATION LTD) ; DE 19935920 A (SIEMENS AG) ; DE 10139142 A (ROBERT BOSCH GMBH) ; DE 4432577 A (SIEMENS AG) ; DE 4432576 A (SIEMENS AG) ;

## Patentansprüche

1. Gefriertaugliches Dosierventil (1), umfassend einen Magnetteil (5) und einen Hydraulikteil (3), wobei der Magnetteil (5) einen durch eine Feder (15) vorgespannten Anker (13 bzw. 13' bzw. 13") hat und der Hydraulikteil (3) einen Ringraum (19) zur Aufnahme und Weiterleitung einer Flüssigkeit und einen in einen Ventilsitz (21) weisenden Stößel (17) hat, wobei der Ventilsitz (21) eine Düsenöffnung (25) an der dem Stößel (17) abgewandten Seite hat,
**dadurch gekennzeichnet, dass**
im unbestromten Zustand der Stößel (17) den Ringraum (19) zu einer Öffnung, insbesondere der Düsenöffnung (25), so lange versperrt bis durch den Gefrierdruck der sich verfestigenden Flüssigkeit auf den Anker (13 bzw. 13' bzw. 13") mittels einer Entlastungsbewegung ein Gefrierdehnungsraum geschaffen wird.

2. Gefriertaugliches Dosierventil nach Anspruch 1,
weiterhin **dadurch gekennzeichnet, dass**
die Entlastungsbewegung den Stößel (17) von dem Ventilsitz (21) abhebt.

3. Gefriertaugliches Dosierventil nach einem der vorhergehenden Ansprüche, weiterhin **dadurch gekennzeichnet, dass**
der Ringraum (19) entlang eines bestimmten Abschnitts des Stößels (17) verläuft.

4. Gefriertaugliches Dosierventil nach einem der vorhergehenden Ansprüche, weiterhin **dadurch gekennzeichnet, dass**
die Länge des Ringraums (19) so geschaffen ist, dass der Magnetteil (5) in einem deutlich niedrigeren Temperaturbereich als das Endstück (23) des Hydraulikteils (3) des Ventils liegt.

5. Gefriertaugliches Dosierventil nach Anspruch 1, weiterhin **dadurch gekennzeichnet, dass**
die Flüssigkeit vorzugsweise eine Harnstoffwasserlösung ist.

6. Gefriertaugliches Dosierventil nach einem der vorhergehenden Ansprüche, weiterhin **dadurch gekennzeichnet, dass**
der Ringraum (19) in seinem Durchmesser auf ein Volumenminimum reduziert ist, ohne dass ein merklicher Druckabfall entlang des Ringraums (19) auftritt.

7. Gefriertaugliches Dosierventil nach Anspruch 1 oder Anspruch 6, weiterhin **dadurch gekennzeichnet, dass**
der Stößel (17) einen Durchmesser kleiner oder gleich 2 mm hat und der Ringraum 5/10 mm größer als der Stößel (17) ist.

8. Gefriertaugliches Dosierventil nach einem der vorhergehenden Ansprüche, weiterhin **dadurch gekennzeichnet, dass**
das Dosierventil (1) in seinem Inneren eine Membran (33) oder einen elastischen Boden (33') hat.

9. Gefriertaugliches Dosierventil nach Anspruch 8, weiterhin **dadurch gekennzeichnet, dass**
die Membran (33) oder der elastische Boden (33') auf der dem Ventilsitz (21) abgewandten Seite des Stößels (17) vorhanden ist.

10. Gefriertaugliches Dosierventil nach Anspruch 8 oder 9, weiterhin **dadurch gekennzeichnet, dass**
die Membran (33) mit dem Ventilgehäuse (69) oder der elastische Boden (33') mit dem Magnetgehäuse (11) gedichtet in Kontakt ist, vorzugsweise verschweißt ist.

11. Gefriertaugliches Dosierventil nach einem der vorhergehenden Ansprüche, weiterhin **dadurch gekennzeichnet, dass**
die Feder (15) im Betrieb in der Flüssigkeit liegt.

12. Gefriertaugliches Dosierventil nach einem der vorhergehenden Ansprüche, weiterhin **dadurch gekennzeichnet, dass**
eine Ausgleichsverbindung im Anker (13") vorgesehen ist.

13. Gefriertaugliches Dosierventil nach Anspruch 12, **dadurch gekennzeichnet, dass**
der Druck auf zwei gegenüberliegenden Seiten des Ankers (13") durch eine Ausgleichsbohrung im Anker (13") ausgeglichen ist.

14. Gefriertaugliches Dosierventil nach einem der vorhergehenden Ansprüche, weiterhin **dadurch gekennzeichnet, dass**
der Hydraulikteil (3) des Dosierventils (1) einen kleineren Durchmesser als der Magnetteil (5) des Dosierventils (1) hat.

15. Gefriertaugliches Dosierventil nach einem der Ansprüche 1 bis 7 **dadurch gekennzeichnet, dass**
eine Scheibe oder ein Lager (57) neben dem Ventilsitz (21) angeordnet ist.

16. Gefriertaugliches Dosierventil nach Anspruch 15, weiterhin **dadurch gekennzeichnet, dass**
die Scheibe oder das Lager (57) mit exzentrisch angeordneten Durchlassöffnungen (65a, 65b, 65c und 65d) versehen ist.

17. Gefriertaugliches Dosierventil nach einem der Ansprüche 1 bis 8, weiterhin **dadurch gekennzeichnet, dass**
das Ventil mit einem axialen Anschluss für die Flüssigkeit ausgestattet ist.

18. Gefriertaugliches Dosierventil nach einem der vorhergehenden Ansprüche, weiterhin **dadurch gekennzeichnet, dass**
der Anker (13 bzw. 13' bzw. 13") eine runde Form hat und/oder der Anker (13 bzw. 13' bzw. 13") eine Form einer flachen Scheibe hat.

19. Gefriertaugliches Dosierventil nach einem der vorhergehenden Ansprüche, weiterhin **dadurch gekennzeichnet, dass**
ein dichtender Topf (63) den Anker (13") als Gleitlagerhalterung umfasst.

20. Gefriertaugliches Dosierventil nach einem der Ansprüche 1 bis 19, weiterhin **dadurch gekennzeichnet, dass**
ein dichtender Ring (47), der vorzugsweise nicht magnetisch ist, als Magnetflusslenker im Bereich des Ankers (13') vorgesehen ist.

21. Gefriertaugliches Dosierventil nach einem der vorhergehenden Ansprüche, weiterhin **dadurch gekennzeichnet, dass**
neben der Düsenöffnung (25) ein optional zweiter Ausgang (45) als Öffnung vorgesehen werden kann.

22. Gefriertaugliches Dosierventil nach einem der vorhergehenden Ansprüche, weiterhin **dadurch gekennzeichnet, dass**
der Ventilsitz (21) optional mit einer Düsenplatte (27) abgedeckt sein kann.

23. Gefriertaugliches Dosierventil nach Anspruch 11, weiterhin **dadurch gekennzeichnet, dass**
die Feder (15) durch mindestens 2 Einprägungen, vorzugsweise 4 Einprägungen (43), als Anschlagsflächen ortsfest gehalten wird und **dadurch** sich kein Hinterschnitt bildet, welcher die Fließbewegung des einfrierenden Fluids behindern kann.

24. Abgasreinigungssystem mit einem Dosierventil nach einem der Ansprüche 1 bis 23, auf dessen Flüssigkeitseingang ein flexibler Schlauch steckt, und das in fluidischer Kommunikation mit einer Kraftfahrzeugabgasanlage steht.

## Claims

1. Freeze-resistant metering valve (1), comprising
a magnetic part (5) and a hydraulic part (3), the magnetic part (5) having an armature (13 or 13' or 13") biased by a spring (15) and the hydraulic part (3) having an annular space (19) for receiving and conveying a liquid and a tappet (17) directed into a valve seat (21), the valve seat (21) having a nozzle opening (25) on the side facing away from the tappet (17),
**characterised in that**
in the currentless state, the tappet (17) blocks the annular space (19) in the direction of an opening, in particular the nozzle opening (25), until a freezing expansion space is created by the freezing pressure of the solidifying liquid on the armature (13 or 13' or 13") by means of a relieving motion.

2. Freeze-resistant metering valve according to Claim 1, further **characterised in that**
the relieving motion lifts the tappet (17) from the valve seat (21).

3. Freeze-resistant metering valve according to one of the preceding claims, further **characterised in that**
the annular space (19) extends along a specific portion of the tappet (17).

4. Freeze-resistant metering valve according to one of the preceding claims, further **characterised in that**
the length of the annular space (19) is created such that the magnetic part (5) is located in a markedly lower temperature region than the end piece (23) of the hydraulic part (3) of the valve.

5. Freeze-resistant metering valve according to Claim 1, further **characterised in that**
the liquid is preferably a urea-water solution.

6. Freeze-resistant metering valve according to one of the preceding claims, further **characterised in that**
the diameter of the annular space (19) is reduced to a minimum volume without an appreciable pressure drop occurring along the annular space (19).

7. Freeze-resistant metering valve according to Claim 1 or Claim 6, further **characterised in that**
the diameter of the tappet (17) is less than or equal to 2 mm and the annular space is 5/10 mm larger than the tappet (17).

8. Freeze-resistant metering valve according to one of the preceding claims, further **characterised in that**
the metering valve (1) has a diaphragm (33) or a resilient base (33') in its interior.

9. Freeze-resistant metering valve according to Claim 8, further **characterised in that**
the diaphragm (33) or the resilient base (33') is present on the side of the tappet (17) facing away from the valve seat (21).

10. Freeze-resistant metering valve according to Claim 8 or 9, further **characterised in that**
the diaphragm (33) is in sealing contact with, preferably welded to, the valve housing (69) or the resilient base (33') is in sealing contact with, preferably welded to, the magnet housing (11).

11. Freeze-resistant metering valve according to one of the preceding claims, further **characterised in that**
the spring (15) is located in the liquid during operation.

12. Freeze-resistant metering valve according to one of the preceding claims, further **characterised in that**
a compensation connection is provided in the armature (13").

13. Freeze-resistant metering valve according to Claim 12, **characterised in that**
the pressure on two opposing sides of the armature (13") is compensated by a compensation bore in the armature (13").

14. Freeze-resistant metering valve according to one of the preceding claims, further **characterised in that**
the hydraulic part (3) of the metering valve (1) has a smaller diameter than the magnetic part (5) of the metering valve (1).

15. Freeze-resistant metering valve according to one of Claims 1 to 7, **characterised in that**
a disc or a bearing (57) is arranged in the vicinity of the valve seat (21).

16. Freeze-resistant metering valve according to Claim 15, further **characterised in that**
the disc or the bearing (57) is provided with eccentrically arranged through-passages (65a, 65b, 65c and 65d).

17. Freeze-resistant metering valve according to one of Claims 1 to 8, further **characterised in that**
the valve is equipped with an axial connection for the liquid.

18. Freeze-resistant metering valve according to one of the preceding claims, further **characterised in that**
the armature (13 or 13' or 13") has a round form and/or the armature (13 or 13' or 13") has a form of a flat disc.

19. Freeze-resistant metering valve according to one of the preceding claims, further **characterised in that**
a sealing pot (63) surrounds the armature (13") as a sliding-bearing holder.

20. Freeze-resistant metering valve according to one of Claims 1 to 19, further **characterised in that**
a sealing ring (47), which is preferably non-magnetic, is provided as a magnetic flux deflector in the region of the armature (13').

21. Freeze-resistant metering valve according to one of the preceding claims, further **characterised in that,**
in addition to the nozzle opening (25), an optional second outlet (45) can be provided as an opening.

22. Freeze-resistant metering valve according to one of the preceding claims, further **characterised in that**
the valve seat (21) can be optionally covered by a nozzle plate (27).

23. Freeze-resistant metering valve according to Claim 11, further **characterised in that**
the spring (15) is fixedly held by at least two projections, preferably four projections (43), as stop faces and as a result no undercut which can hinder the flow of the freezing fluid is formed.

24. Exhaust gas cleaning system with a metering valve according to one of Claims 1 to 23, on whose liquid inlet a flexible hose is placed, and which is in fluidic communication with a motor vehicle exhaust gas system.

## Revendications

1. Soupape de dosage (1) résistante au gel, comprenant une partie aimantée (5) et une partie hydraulique (3), la partie aimantée (5) ayant un ancrage (13 et/ou 13' et/ou 13") précontraint par un ressort (15) et la partie hydraulique (3) ayant un espace annulaire (19) pour recevoir et acheminer un liquide et un piston (17) orienté dans un siège de soupape (21), le siège de soupape (21) ayant une ouverture de buse (25) au niveau du côté opposé au piston (17), **caractérisée en ce que**
à l'état non alimenté, le piston (17) bloque l'ouverture de l'espace annulaire (19), notamment l'ouverture de buse (25), jusqu'à ce que la pression de congélation du liquide se figeant crée sur l'ancrage (13 et/ou 13' et/ou 13") un espace expansé par la congélation, du fait d'un mouvement de décharge.

2. Soupape de dosage résistante au gel selon la revendication 1, **caractérisée en outre en ce que**
le mouvement de décharge soulève le piston (17) du siège de soupape (21).

3. Soupape de dosage résistante au gel selon l'une quelconque des revendications précédentes, **caractérisée en outre en ce que**
l'espace annulaire (19) s'étend le long d'une section définie du piston (17).

4. Soupape de dosage résistante au gel selon l'une quelconque des revendications précédentes, **caractérisée en outre en ce que**
la longueur de l'espace annulaire (19) est créée de telle sorte que la partie aimantée (5) repose dans une zone de température sensiblement plus basse que l'extrémité (23) de la partie hydraulique (3) de la soupape.

5. Soupape de dosage résistante au gel selon la revendication 1, **caractérisée en outre en ce que**
le liquide est de préférence une solution aqueuse d'urée.

6. Soupape de dosage résistante au gel selon l'une quelconque des revendications précédentes, **caractérisée en outre en ce que**
l'espace annulaire (19) est réduit dans son diamètre à un volume minimal, sans qu'aucune chute de pression notable ne se produise le long de l'espace annulaire (19).

7. Soupape de dosage résistante au gel selon la revendication 1 ou 6, **caractérisée en outre en ce que**
le piston (17) a un diamètre inférieur ou égal à 2 mm et **en ce que** l'espace annulaire est supérieur de 5/10 mm au piston (17).

8. Soupape de dosage résistante au gel selon l'une quelconque des revendications précédentes, **caractérisée en outre en ce que**
la soupape de dosage (1) a à l'intérieur une membrane (33) ou un fond élastique (33').

9. Soupape de dosage résistante au gel selon la revendication 8, **caractérisée en outre en ce que**
la membrane (33) ou le fond élastique (33') sont disposés sur le côté du piston (17) opposé au siège de soupape (21).

10. Soupape de dosage résistante au gel selon la revendication 8 ou 9, **caractérisée en outre en ce que**
la membrane (33) est rendue étanche par contact avec le boîtier de soupape (69) ou le fond élastique (33') est rendu étanche par contact avec le boîtier d'aimant (11), de préférence par soudage.

11. Soupape de dosage résistante au gel selon l'une quelconque des revendications précédentes, **caractérisée en outre en ce que**
le ressort (15) fonctionne au milieu du liquide.

12. Soupape de dosage résistante au gel selon l'une quelconque des revendications précédentes, **caractérisée en outre en ce que**
une jonction d'équilibrage est prévue dans l'ancrage (13").

13. Soupape de dosage résistante au gel selon la revendication 12, **caractérisée en ce que**
la pression régnant sur les deux côtés opposés de l'ancrage (13") est équilibrée par un alésage d'équilibrage disposé dans l'ancrage (13").

14. Soupape de dosage résistante au gel selon l'une quelconque des revendications précédentes, **caractérisée en outre en ce que**
la partie hydraulique (3) de la soupape de dosage (1) a un diamètre inférieur à la partie aimantée (5) de la soupape de dosage (1).

15. Soupape de dosage résistante au gel selon l'une quelconque des revendications 1 à 7 **caractérisée en ce que**
un disque ou un palier (57) sont disposés à côté du siège de soupape (21).

16. Soupape de dosage résistante au gel selon la revendication 15, **caractérisée en outre en ce que**
le disque ou le palier (57) sont dotés d'ouvertures traversantes (65a, 65b, 65c et 65d) disposées de façon excentrique.

17. Soupape de dosage résistante au gel selon l'une quelconque des revendications 1 à 8, **caractérisée en outre en ce que**
la soupape est équipée d'un raccord axial pour le liquide.

18. Soupape de dosage résistante au gel selon l'une quelconque des revendications précédentes, **caractérisée en outre en ce que**
l'ancrage (13 et/ou 13' et/ou 13") a une forme ronde et/ou l'ancrage (13 et/ou 13' et/ou 13") a une forme de disque plat.

19. Soupape de dosage résistante au gel selon l'une quelconque des revendications précédentes, **caractérisée en outre en ce que**
un creuset d'étanchéification (63) servant de support de palier lisse entoure l'ancrage (13").

20. Soupape de dosage résistante au gel selon l'une quelconque des revendications 1 à 19, **caractérisée en outre en ce que**
une bague d'étanchéification (47) de préférence non magnétique est prévue pour servir de d'élément directeur de flux magnétique dans la zone de l'ancrage (13').

21. Soupape de dosage résistante au gel selon l'une quelconque des revendications précédentes, **caractérisée en outre en ce que**
une seconde sortie (45) optionnelle peut être prévue pour servir d'ouverture, à côté de l'ouverture de buse (25).

22. Soupape de dosage résistante au gel selon l'une quelconque des revendications précédentes, **caractérisée en outre en ce que**
le siège de soupape (21) peut être recouvert de façon optionnelle par une plaque de buse (27).

23. Soupape de dosage résistante au gel selon la revendication 11, **caractérisée en outre en ce que**
le ressort (15) peut être maintenu sur place par au moins 2 estampes, de préférence 4 estampes (43), servant de surfaces de butée et permettant ainsi d'éviter toute formation de contre-dépouille pouvant entraver le mouvement d'écoulement du liquide en train de geler.

24. Système de nettoyage de gaz d'échappement avec une soupape de dosage selon l'une quelconque des revendications 1 à 23, un flexible étant placé sur son admission de liquide et le système étant en communication fluidique avec une installation d'échappement de véhicule automobile.
